# EUROPEAN PATENT APPLICATION

(11) **EP 3 836 066 A1**
(43) Date of publication of application: **16.06.2021**
(21) Application number: 21152652.0
(22) Date of filing: 30.06.2015
(51) Int. Cl.: G06Q 30/06, G06Q 30/00, G06Q 30/04, G06Q 20/14, G06Q 40/00, G06Q 20/18, G06Q 20/20, G06Q 20/10, G09C 1/00

(54) **SYSTEM AND METHOD FOR TRACKING EXPENSES AND BILLING**

(30) Priority: 30.06.2014 US 201461998577 P; 29.06.2015 US 201514756619
(62) Divisional of application: 15815178.7
(71) Applicant: Shaaban, Ahmed, Farouk, Chicago, IL 60601 (US); Thandra, Venkat, Chicago IL 60601 (US)
(72) Inventor: Shaaban, Ahmed, Farouk, Chicago, IL 60601 (US); Thandra, Venkat, Chicago IL 60601 (US)
(74) Representative: Cabinet Beaumont

(57) **Abstract**

The present invention relates to an improved system and method for tracking expenses and billing them to a client, matter, task, activity, client group or phase and assessing goods and services purchased to these categories on a line by line basis. The system also allows an employee to place an order by selecting from a list of preapproved vendors and checking bath vendor ratings and item ratings prior to purchase. Once the items are received, the bill of lading is reviewed for receipt of the proper items in the proper quantities. This information may be scanned, texted or emailed into the system to generate additional in house reviews for the system. Information on the items purchased is allocated across one or more ledgers on a line by line basis and may be entered into one or more of the following categories: Client ID, Task, Activity, Phase, Matter and Client Group.

## Description

### Priority Claim

The present application herewith claims priority of Provisional Application 61/998,557, which was filed June 30, 2014, and shall be considered as fully set forth herein.

### Field of the Invention

The present invention relates to the automation of billing and time keeping, and more particularly, tracking and billing orders and expenditures by vendors and posting journal entries to ledgers andsubledgers.

### Background of the Invention

In the current marketplace, there are a variety of computerized time and billing systems for professional firms which are marketed under the following Trademarks: Timeslips by Sage, BillQuick, Clio and others. Some of these systems are computer based while others operate primarily in a cloud computing environment. These systems, however, are not suited to large law firms and professional firms having a global presence, with multiple offices in a plurality of countries which must be linked together for proper billing and financial management. In addition, these are basic programs which do not contain the most up to date features such as transmissions by text, email, fax, computer voice calling, and social media announcements and billing. Other numerous and varied disclosures related to billing and timekeeping are also disclosed in the prior art as shown below.

EP 1,145,162 issued to Ashby discloses the use of a System for processing credit applications, financial and insurance services and administrative and management tools. The System will generate a price quote for insurance and finance and facilitate on line credit application processing. It will further provide detailed reports for finance, insurance inventory, tracking and other administrative matters. It will provide quick quotes for a lease or loan. It will also perform: inventory tracking, insurance tracking, purchase tracking, applicant profiling, targeted marketing, customer satisfaction, etc. The system will collect data for credit, a description of the item being sold, insurance will be offered for the item, licensing and data required for the government will be collected.

Ashby also discloses that the User can be a financial institution, a dealer, manufacturer, insurer or supplier. It can utilize and store credit agreements with customer ratings and interest rates which can be bundled and sold on a public exchange. FAQ's can be provided in the system, and it can provide Quick Quotes on the spot to the consumer. However, this disclosure is directed to car sales and insurance, not timekeeping. The terms it stores are contract terms, contract ID, customer ID, buy rate, the sales rate, dealer markup, payments, cash down, trade in value, lease fee, monthly payments, commission and taxes due. However, Ashby does not relate to professional timekeeping or billing.

EP Patent No. 1,769,452 issued to Allin discloses the useof a computerized system for residential and commercial construction projects to maintain and disburse construction draws during construction. It can track lien waivers, and can prepare, approve, sign and distribute hundreds of checks to subcontractors each month. It also tracks construction change orders. It can manage all of the persons involved in each draw. Itmanages and generates a construction budget and time line. It also manages payments to material suppliers. It can manage and store the inspection data for each project. It can manage budgets for GC's as well as the subs. It handles ACH payments. Template forms are utilized to facilitate the draw process. Notices can be sent by email, text orvoice.

EP Patent No. 2,026,222 issued to Alquier discloses the use of a system and method which allows the addition, modification and deletion of data base fields dynamically without the use of a data base administrator. The system allows the addition and modification of an informational structure dynamically distributed directly via the user interface. Itsupports different types of entity attributes including, text, numerical information, date ad time, predefined values and binary objects, allows the creation of relational dependancies between information entities (e.g., patent/child), provides flexible reporting capabilities including spreadsheets, slides, documents, timelines, etc.; it allows a configurable data entry interface; it allows importation of data from external sources; it allows full text searches; logs modifications for an audit trial (important for pharma and med devices); includes email notifications. It allows for a user interface that is flexible and configurable. The system uses template items, coding and tables to accomplish these purposes. However, it is not directed toward time tracking and billing generation.

U.S. Patent Disclosure No. 2003/0120538 filed by Boerke, et al. discloses the use of a method for tracking progress on a task by dividing the period of time into a plurality of timeslots and determining a target number of subtasks to be completed during each timeslot. For example, the time slots may be divided into 15 minute increments. The system only tracks the number of subtasks completed for each timeslot. The method also keeps track statistically of variances in subtasks completed between workers. The task may include any type of work. The process may be used for planning purposes, i.e., as a planning tool such that management can plan and process daily or monthly work shifts according to the work to be done for particular tasks and subtasks. This helps a supervisor spot and correct negative variances in worker performance. The progress can be logged into a computer or worksheet or in paper format. Problems are also noted by the method for correction to improve performance by variance cards.

U.S. Patent Disclosure No. 2013/00090968 filed by Borza, discloses the use of an employee management and scheduling method which is directed to ensure that adequate personnel are present as required and that statutory requirements are met and costs are tracked and minimized. The Borza disclosure is also directed at apps for management cell phone usage wherein managers can track employees, their shifts and their skills and managing same. This allows for real time changes by employees that are sick or have not shown up for work. The locations may also be tracked. Scheduling software is used to manage multiple employees at multiple locations. From one screen, a manager may create, edit and delete shifts and also have access to other aspects of managing the organization staffings with information about positions, teams, skills, etc. being provided. The System can print Shift Assignment Reports and Employee Reports. However, this disclosure is directed toward scheduling employees and not tracking their time or billing for their time.

U.S. Patent Disclosure No. 2012/0233044 filed by Burger, et al., discloses the use of a Method and System for labor project management and costing which may run on a cell phone app to monitor employee activity, identify faulty activity and manage allocation of labor resources. The app, as installed on an employee cellphone, allows the employee to travel to various job locations and record the activities at each job location. The employee may log into or out of the timeclock app installed on the employee's cellphone. The system can be used to monitor managers and administrators as well as employees. The system can be used to transmit payroll information. A flag may be generated if the worker travels outside the permissible areas allocated to his role. The system stores employee photos. Job locations, routes, job codes, SIC codes, etc. may be entered into the back end by an administrator. The system also generates reports, and has a "Dashboard" or summary report simply show who is on the jobe, what time they arrived and GPS confirmation of location. The LPM platform may also be operated in the Cloud.

U.S. Patent Disclosure No. 2014/0258057 filed by Chen discloses the use of a system and method for tracking the User's time of a mobile device for the purpose of billing clients. The system is provided with adigital timer which is launched at the time of arrival and then stopped when the employee leaves. The system is directed at tracking time on a mobile device or app. It tracks time sending texts and emails. Time is recorded as soon as the professional receives a voice mail, phone call, text or email. The usercan also input notes with the system's time recording and entry. The app automatically looks up in the user's contacts list whether the call or email or text coming in is from a client, and if so, it begins to track it for billing purposes. If not in the contacts registry, the user is alerted at the time and can add the contact as a client to be billed.

U.S. Patent Disclosure No. 2013/0290154 filed by Cherry, et al. discloses the use of the system and method to manage employees at a plurality of jobsites by providing a database wherein a set of job site data is stored therein. Employee devices may collect a set of time punch data and photos to store in the system. Management apps are used on supervisory devices to monitor the job site data and employees and validate photos and activate employee apps. This system is shown operating on a Cloud environment. The app will operate with a web browser, WiFi or on GPS authentication. The system essentially operates as a time tracking system for job sites. The system stores time photos of the employees at checkin and check out. The system also records a job number, a job phase and a cost code. The system also has a payroll calculator communicating with a payroll service.

U.S. Patent Disclosure No. 2001/0042032 filed by Chrawshaw discloses the use of a system for capturing, processing and reporting time and expense data which can include flat fee billing, maximum fee billing and will also allow for discounts and write offs. It can be used for a wide range of businesses. A client will not have access to internal data of the company. The system will produce bills, expense reports, time sheets, proposals and project tracking. This appears to be a conventional program for law firm data which is run on a local server for one location. The system may produce various reports as needed. Bills may be delivered by email. The program will create envelopes for the bills. The system will also create budgets for the client.

US Pat. No. 6,038,547 issued to Casto discloses the use of a construction tracking and payment system for use by contractors and subcontractors so that work may be tracked and payment may be timely made after the work is completed and inspections performed. The system complies with AIA requirements. The system may be implemented on a handheld computer. The system will break down a construction job into various elements, and then a contractor or subcontractor will be given a coy of how the site is partitioned, then each contractor or sub is responsible for submitting applications using the partitioning to ensure uniformity the architect desires to impose. The system can import and use CAD information on the job site. The system uses coding approved by the AIA.

US Pat. No. 6,747,679 issued to Finch, II, et al. discloses the use of a time keeping and expense tracking server including a server that implements computer instructions that define logic for building GUI screens according to user instructions. The user can implement and design the screens needed for the tasks of time keeping and expense tracking. The system may be implemented on the Cloud or Internet with a laptop or wireless device desired. The GUI screen may be customized on a copany by company basis, a department by department basis, etc. The system also includes security wherein projects and project codes are only viewable by certain level employees.

US Pat. No. 7,343,316 issued to Goto, et al. discloses the use of a network based shift scheduling system for generating temporary shift workers. It is sent over portable terminals over a network. The system is set to secure and provide work for a plurality of workers. Workers can also submit cancellations or shift changes via the system. The system also accommodates email for communication purposes. The system may also recruit new employees. The system stores the name, age, sex address, mail address and qualifications of the employee, the workable time slots, the type of job, hourly wage, etc.

WPO 2014/016796 filed by Gupta, et al. discloses the use of a system and method for employee tracking in a mobile communication device wherein dynamic location reports may be generated in real time or near real time. The system is directed to door to door delivery or pickup sales forces. The System uses a mobile app on the employees cellphone to conduct the tracking of the employee. The system will raise flags if deviations from tracking occur. The system uses Blue Dophil software to analyze where employees should be performing tasks and produces flags when paramaters gathered fall outside permissible ranges. These flags are sent to management via text or email.

US Pat. No. 6,832,176 issued to Hartigan, et al. discloses the use of a method and system for tracking and reporting time spent on tasks in different application on the end users' computers while the tasks are bing performed. It may track the opening and closing of files automatically and send reports and messages directly to and from other applications. The software may also suggest categories for each task based upon at least one criteria. The system may use MS Outlook for assistance in tracking tasks and transmitting reports. It is directed toward attorneys and accountants. The system may track fixed fees and use data collected for evaluating production or sweat equity bonuses to employees. The system may track a plurality of projects or research endeavors. It can track the time spent by accountants on spreadsheets. It can track the time engineers spend on designing computer code or simulating circuit designs, etc. It mentions the use of Timeslips for professional time tracking and TABS ₁₁ for tracking other professional time spent on tasks and projects. The system tracks time on computers used by the professionals involved. The system presents toolbars to assist in tracking time. The system will track time spent in applications such as MS Word, Excel, Outlook, Power Point, etc. It will track when the application is open, active and then closed. It can score and rate the usage of these various types of software automatically. Various reports may be generated by the system for management usage on a periodic basis, as desired.

WPO Patent Disclosure No. 2015/079776 to Hishiki discloses the use of a work state management system that manages clock in times for drivers of vehicles that work overnight shifts and calculates the appropriate breaks for the driver so that the driver is not over tired.

U.S. Patent Disclosure No. 2014/0344,122 filed by Hodgin, discloses the use for billing for time spent in an IM session by a service person wherein the system can automatically bill a project/client by searching for the name of the client or project within a text or instant message or a series or session of same. If the system cannot find the name of a client or project, then the user will associate the IM session with a new project or client so that the client may be billed for the IM session with the client. Or the System may default into a common template for the User's typical instant messaging sessions.

U.S. Patent Disclosure No. 2009/0006228 filed by Hodgin discloses the use of a time tracking system and method similar to the IM system noted above by Hodgin. The Hodgin system will also store a list of prior associations to Projects and Clients that are built on the same or similar words and phrases.

U.S. Patent Disclosure No. 2002/0154122 filed by Jackson, Jr. discloses the use o an improved system for employers, referral agencies, consultants and independent contractors to hire and manage employees and provide tax reports and wage reports. The Jackson, Jr. System may track and manage employees, salaries and experience to provide optimal benefits to the employer. The System produces computerized scheduling, billing, record keeping and payment templates. It provides a listing of invoices for the User to refer to. It consists of providing invoices for contractor services and performs its functions in a cloud based system.

US Pat. No. 8,838,486 issued to Kong, et al., discloses the use of a time manager interface on a communications display device which allows a worker to keep track of her or his time and activities. The time manager keeps track of time spent logging into and out of the system. This was important in years past when boot time were quite long. It discloses the use of scanning in employee badges to track work time. This disclosure is directed toward a system for checking work in and work out time. In one version of an embodiment, the System is located in the field. It discloses the use of GPS in the field to create an audit trail of time worked. Biometric information may be used for the system to identify the worker. It can be used nationwide for multiple local offices. It may be coupled to communicate with employee hand held devices. It can work over WiFi and cellular networks. It can store: DOB, SSN and other employee details. It can be used with a barcode or QRT code. It can be used in connection with microphones, cameras and scanners. For remote sites, the system can check the IP address of the computer or hand held device to ensure security in the system. The system can also be used to check work schedules to lock an employee out of the system when not scheduled. When an employee arrives at a worksite, upon verification, one or more emails or text messages may be sent to management for that site. Employees may view the work schedules of other employees if granted permission to do so. In doing so, employees can request work dates and exchange them with others. The system can differentiate between exempt and non exempt employees. The system can display messages to employees during time in and time out registration.

U.S. Patent Disclosure No. 2012/0278211 filed by Loveland discloses a system for remotely tracking and monitoring Worker's activities via mobile phones or other mobile tracking devices. This system monitors continuously whether or not a worker is present at a worksite.

WPO 2010/11652 filed by Manser discloses a System and Method for tracking employee performance. The Manser system provides a user interface to allow the user to assess the balance of hard skills and soft skills of an employee, evaluate the employee's performance in a plurality of categories and compare the average cost for the job in the marketplace to the cost of the employee being evaluated. The system also analyzes the average cost of a similar job in the relevant marketplace during employee reviews. The program continually monitors the value of an employee to the employer to determine ROI at any given time. The system can be applied to direct hires, contractors, temps or any employee relationship. The system allows the identification of both over achievers and under achievers. The system provides a means by which employees may determine how to get the highest ratings via their work efforts.

EP 2338293 filed by Molotsi discloses a system for time tracking for employers on a mobile computing device. The system involves providing an event manager on a mobile computing device for managing a plurality of events which are then synchronized to a server. The system will automatically track time and estimate time spent on a task by the worker. This system logs events in the user's calendar, in emails and texts. Timestamps for events and mapping for the events are provided. A clientlist and data may be provided in one or more files or databases. The system may communicate with a worker's smart phone. The user may be able to open, edit delete, review or manage all automatically created event records. The system may use information in the text, email, calendar, to automatically create a time tracking record for the user. In addition, the system may automatically convert emails, texts, meetings on a calendar to a time tracking event by means of a pop up box to the user.

WPO 2008/061146 filed by Neveu Holdings, LLC discloses a system and method for remote time collection for employee time on job sites. The system can collect an employee's name, picture, title, contact information, health and/or safety information, skill information, etc. The system can also collect for each employee a project name, project identification, location, project start date, project supervisor and detailed comments about project activity. The system can also collect information on vendors, such as name, address, phone, contacts and type of vendor. The system can also use GPS information and compare it with when the employee is supposed to work. The system collects biometric information to identify an employee. In one embodiment, a time collection database is configured to receive, process and store information related to projects such as name, identification, location start date, supervisor, etc; vendor's name, address, number contact, subcontractor type, etc. project supervisors, tasks, employee titles, departments and employee time records. Office data collection may include: job site, task and project information via a wireless connection. Encryption is used to transmit data to and from the remote site. The system may also include a field scheduling module to schedule a job for aparticular jobsite and for a specific remote user(s). The user can edit hours and view comments from remote workers. Remote monitoring can record task completion, view management comments and ask for management assistance and crew responsibilities.

U.S. Patent Disclosure No. 2015/0081381 filed by Okobadiscloses a system and method for recording time which may be used on a device, software or application. It may be used by logging into a plugin or extension. The time recorded may be exchanged for vouchers which may be redeemed or traded with other members. A user will register with an ID and password to log into the system. The system may record device activity, software activity, application activity, keyboard activity and mouse activity. The user's time spent in the browser or on a video game may be given a redeemable value. A database may store the recorded activity for further analysis. The system will work on computers, tablets, cell phones, television, games, digital books, exercise apparatus, web browsers, mobile apps and video games. Vouchers may represent monetary value, promotions, products or services. User name and password may be stored in system cookies. The system can capture video game or browser activities, keyboard or mobile keyboard activities. The activity spent in the system may translate to purchasing power so that the user may receive optimized value from their activities and the system may deliver purchasing incentives at the right time and place and for the right product or service. A business maybe selected as a favorite from user activity on the system.

U.S. Patent Disclosure No. 2015/0081487 filed by Porter, et al., discloses the use of a time tracking and productivity system including a tracking component to locate an employee to record time spent at various locations. This system is designed to monitor and improve coordination of patient care, and in particular, to limit the number of patient hours a resident physician can work per week. When the rules implemented by theACGME are violated, strict fines and probations or suspension may be implemented. This system is primarily concerned with tracking an employee's location and work hours. This system can include cloud performance. It is the movement of an employee within predetermined boundaries that will trigger the recording of a new event. It can track time in a patient's room, a brake area, doing paperwork, etc. A GUI is used on handheld devices. The system can also use tags that interact with RF signals. The system records employee info and FRIDA numbers, the resident program director, the resident coordinator, start and end times for resident shifts, house calls, in house calls, night float, etc. If moonlighting is permitted, the system can track moonlighting hours as well. It will store vacation schedules and rotation schedules. The shift log can include a short trip buffer. Automatic warnings of over limit hours are sent to management for the residents via text, phone, email, etc.

US Pat. No. 6,185,514 issued to Skinner discloses a method and system for automatically collecting and analyzing information regarding time and work performed on a computer. It uses a data collector for monitoring certain potions of a worker's computer activity and an analyzer for showing which portions of the activity were continuous work activities, and the system will categorize the work into preset projects and tasks within a project. The information is periodically written to data storage. The system is directed toward telecommuters. The system automatically excludes time where there was no activity on a computer. The system is used to forecast future projects with reduced financial risk. The system includes the automatic documentation of time. The data stored on the system is encrypted so that it cannot be altered by the user. The data collector automatically collects the activity on a mouse and on the keyboard of the computer user. The system creates a log file of work activity. A hardware abstraction layer can interface with phones and other devices and can be used with pointing devices such as a tabled or mouse. The system keeps track of activities within open multiple windows on a computer.

US Pat. No. 8,209,243 issued to Smith, et al., discloses the use of a system for performing real time labor management and timesheet reporting which is adapted to wirelessly transmit timesheet information. The portable devices may be dedicated to tracking time only and cannotperform other computing functions. The system includes a portable electronic punch system that is capable of communicating with the labor management system via text. The system allows user to manage work schedules and report timesheet information without requiring an internet accessible computer. The units send timesheet information directly back to the server for analysis via wireless network. The text messages may contain: employee ID, clock in time, clock out time, break times, days worked, days off and other work related information. New user information may be set up by text message into the timekeeping system. The system may operate over any wireless system, i.e., GSM, GPRS, CDCP, Bluetooth, Wifi, etc.

US Pat. No. 9,020,848 issued to Ridge, et al., discloses the use of a method for tracking time and location of an employee according to a predefined schedule and it may utilize software to track the presence or non presence of: a NFC (near field communication), BLE (Bluetooth Low Energy) or other wireless device. The system will track the presence of an employee in a geofenced area. It will also track employee time and other data to log that into a payroll system. The low energy device then communicates data to a server if a signal could or could not be detected. It will also allow for manual clocking in and out in case of failure of the back end server. The system can also be used for security purposes. The system can function in real time or in batch request mode. The information may be a time stamp, a status or location of a mobile device. In one embodiment, the system can be used for employees for a retail store or restaurant. The system can utilize Bluetooth tapping to log in. It may be used at a trade fair both by tapping the device to a NFC communicator. It maybe used in connection with a mobile time clock app. It can be used to advise management when non authorized employees enter a restricted work zone. Management may input which work zones are restricted and which are not.

WPO Disclosure 2015/029073 file by Shirish discloses a system and method to measure aggregate and analyze time, effort and productivity by reviewing time spent on activities such as calls, travel, lab work, meetings, discussions and remote visits. PD's or Presence Devices may be used to track employee location. The system can track average daily work patterns. It can track work activities and private activities. It can track emails and browsing. It can account for flexible work hours, use of multiple and different types of computing environments (PC at work and home, smartphones, tablets, etc.) It can capture files, folders, web links, etc. It can make all personal endeavors password protected and private. It is intended to track effort and performance 24/7. It can provide modules that promote work focus and minimize distraction by awarding performance points, badges for consistent performance and progress in performance goals. It can measure improvement by creating an n-dimensional effort data cube and include analytics for custom reports. The system can go into self improvement mode to set goals for self improvement and activities related thereto. It can be used at work whenever and where ever. It has a time tracker for all online time. It has a Merger to merge offline and online time effort mapping. It has an interference engine to determine Work Patterns for employees, leave taken, work done on holidays, desk or supervisory or travel oriented job, etc. The System will also present organization goals and analytics, top performers, work patterns, recent deviations from work patterns. A Collector module measures data to improve the exact work effort at the individual level throughout the day. The System can be used on SAS (Software as a Service) and it maybe hosted in a cloud-computing environment.

U.S. Pat. No. 2012/0173297 A1 disclosed by Styn, et al., a method and system for task tracking and allocation is disclosed. The disclosure provides for a method in which an individual may create a set of instructions operable to perform a set of tasks in a computer readable medium. That set of tasks may comprise maintaining a database, generating a first interface displaying subjects associated with individual issues, and a second interfacewith notes specific to an issue selected by a user. The instructions stored in the database may be implemented accordingly and the computer may maintain a plurality of relationship records containing data indicating relationships across folders. The disclosure also mentions the prior use of MS Project and ERP systems that employ Gantt charts, milestones and tasks and subtasks with complex dependencies. This system keeps track of billable items. However, Van Styn is not a true timekeeping and professional billing system.

US Pat. No. 2014/0108644 A1 disclosed by Zaents, etal., a method and system for tracking time in a web-based environment is disclosed. The method of tracking time involves a web-based application to track time associated with several records. Identifying a record in an active state, generating a record associated with the active record and activating a timer, and having the ability to end the session in response to an indication that the record is an inactive state. The time-tracker may be hosted in a cloud-computing environment. The time-tracker may calculate the entire duration of the record by continuously adding the active times together. The method may detect a predetermined total duration of time has been exceeded and provide such indication to user. This disclosure mentions timekeeping, billing and using a web browser and multiple tabs to record time for multiple clients when a professional is switching back and forth between projects. It is useful for billing, accounting and auditing. More than one user can log into the system on a computer and track time her or his time on the same computer. It also teaches the use of sub-tabs to track time. A stop watch type button is used to switch on and off the time tracking, or time is tracked as the user switches browser windows.

However, none of the above patent disclosures teach or suggest improved billing and timekeeping systems which are able to directly editwork-in-progress sheets, draft and final bills and automatically have those changes reflected in the original work data entries. There are also no timekeeping and billing systems seen in the marketplace that can automatically predict cash flow, partner profits and allow clients to view bills in real time. These and other additional objects and advantages are readily derived from the disclosures and drawings provided herein.

### Summary of the Invention

The present invention consists of Improved Systems and Methods for the handling of Vendor accounts and goods and services received from Vendors and paid for by a firm, as well as automated and computerized systems for meeting the statutory requirements of a variety of jurisdictions to pay VAT taxes, state, local and regional taxes and to enter accounting journal entries which can be shared in real time or near real time with satellite company in interstate and intrastate commerce, as well as globally and regionally.

In one preferred embodiment of the present invention, Improved Vendor Online Order and Tracking System, three way matching is used from the initial ordering function, to the invoice function all the way through the receipt of goods and services function. Upon receipt, all of the persons involved in each transaction will be able to log into the company's proprietary system and rate the good and services and price and quality such that in house vendors that do not perform appropriately are terminated or avoided.

In this particular system, the User of the System, typically an employee or professional, will log into their private online account and make a Request for Proposal from the System. In some instances coding will be provided so that the User can choose from a variety of pre-approved vendors, goods and services and costs and quantities which the User is allowed to purchase based upon the User's name or employee level or rank. For example, the Partners and Managing Partner and Staff and Human Resource Director may have unlimited purchasing power, subject only to daily or weekly reporting to all Partners. Partner may have limits up to their equity in the Firm. Non-equity partners may be limited to their monthly salary, as are other Associates. Staff will always need a sign off from Partners and Management for all expenditures. In some cases, major expenditures must be approved by a Board of Directors or other company team and the system will automatically select these individuals for order approval before the order is sent out to a third party Vendor.

To initiate the system, an employee will be provided with an online account having a subroutine dedicated to purchases of 3^{rd} party services and supplies. Examples of such purchases would include, copier servicing, copier paper and toner, staplers, legal pads, toner cartridges for printers, rubber bands, staplers and rulers. When the User of the system desires to make a purchase of Office Supplies, he will click on a button on his online account for "Online Purchases of Office Supplies", from there hewill see a list of approved vendors, pricing and estimated dates for delivery to select from. Once the Vendor is selected, the employee will then input the quantity and an invoice will automatically be transmitted to the Vendor via text, fax or email. The Vendor will respond and confirm the delivery date, which will then be entered into the improved Vendor Online Order Tracking System by the employee.

Once the goods and services are received, then the Vendor will be rated by the delivery for the quality of the goods, the price, the quickness of delivery, the packaging and any other criteria important to the user of the equipment.

When the next employee places an order with this Vendor, she or he will be able to review the prior purchaser's ratings and reviews prior to ordering again with the same Vendor. If no ratings or reviews have ever been collected from the company's prior orders, then the system will automatically download review data from Yipit, Yelp, Google or Ebay or other online ratings system. If the Vendor consistently gets low ratings, the Vendor will be banned from the System until online ratings improve.

Automatic notices can also be sent to the employee to make reorders at regular intervals so that stock and supplies do not run out at crucial work periods. In such a manner, common items such as copier paper, pens, pencils, pads of paper, copier and printer toner, will not run out.

The invoice, after being submitted, will then be turned over to the Purchasing Department for review where payment will take place, preferably electronically. The System will automatically store the Vendor's preferred forms of payment, typically by check, credit card, ACH transfer, Chase QuickPay, Paypal, Bitcoin, or other preferred payment method. When the product arrives or the services have been performed, the System will ask the employee who received the goods and services and used them to rate them. These ratings may be shared with the Vendor as well as with the public online.

In the present inventive Improved Vendor Online Order and Tracking System, purchases can be made for a plurality of Offices, Employees and Clients. The Improved Vendor Online Order and Tracking System will be able to upload Purchase Orders in a wide variety of formats, including Excel and Quattro Pro, Word and Wordperfect and Open Office formats and .csv files. The System will also be able to capture Approver details where a third party must approve a deal previously made, and especially in instances where one or more clients are involved in paying for the purchase. The System will be able to generate reports by payment method, house bank, due date, aging, Open Items by Vendor. The System will also link to and utilize third party purchase order systems. The System will also interface with third party Taxi Expense systems. The System will also be able to transfer Hard and Soft costs between Matters, Clients, Client Groups, Tasks, Activities and Phases. The System will also automatically handle returns, rejection letters for goods with the appropriate reason, and will be able to store RMA's and print out a return label to the Vendor's specifications.

If a due date for goods and services has been set by the System and a review has not been entered by the User for receipt of the goods and services, the System will start to automatically ping the employee to determine if the goods have arrived, and if not, the System will ask the Employee about cancelling the order and obtaining a refund, or if the Employee desires to continue on with the order and continue waiting for arrival of the Goods ordered.

The System will also provide automatic Invoice Verification. When the Goods arrive, scanners will be provided to accept QRT squares or UPC codes with the invoice number to ensure goods are checked into the System at the time of delivery. Once the receipt of goods has been entered into the system, then the Employee requesting the goods/services will be pinged for a review in a day or two. Any Variance noticed on the invoice (Quantity, Quality or Price) is captured as a purchase Variance during Invoice Verification in the System.

The System will also be able to charge an Invoice or Expense to a Partner, line by line. The System can make the select House Bank information (for payment) available on every invoice, or it can block some or all invoices from House Bank invoice payment. The System can block "of counsel" partners from the purchase order and invoicing System unless and until the order is prepaid. The System can block any employee ID from accessing, or ordering from the Vendor Online Order and Tracking System.

Reports can be generated by: local office, regional office, national office or Global office. Any expenses and invoices are standard and can be transmitted between offices and the system will automatically assign an exchange rate to transfer any invoices between offices either those that are in the A/R stage or those which have already been paid and marked as a Business Expense to the Company or Local Office for tax purposes. The System will be able to export or import large amounts of invoices quickly and efficiently between any working office or the Corporate or Global Headquarters. These invoices can be charged to any employee, but especially a partner, or a cost center. The invoice will be able to show a Responsible Party on the Invoice for Tax and Statutory purposes. Invoices can be scanned, faxed, texted or emailed directly into the System for upload and approval. Invoices will be associated with the screen providing online User information and will be associated with a Purchase Order number.

The typical Invoice Data entered into the System for an Invoiceor Purchase consists of the following: Company ID, Vendor ID, Document Date, Terms of Payment, Payment Method, Tax, Amount (Posted to both General Ledger and Expense Ledger), No. of Items, Item Description, UPC, Unit of Measure, Amount per Item and Detailed Description or Narrative. The amount paid can be allocated to one or more of the following Categories; a Task, an Activity, a Matter, a Client, a Client Group and a Phase. The amount paid may be posted against one or more of the following ledgers: a general ledger, a cash ledger and a sub ledger. Taxes may be allocated to one or more of the following ledgers: a general ledger, a cash ledger, a sub ledger and a tax ledger for reporting to the Authirities. The System can also provide a Payment Block for when the Amount and Quantity of items ordered have arrived and there is a Variance in Amount, Quantity or Quality actually received, then the System will flag the invoice and the Purchasing Manager will investigate and ask for an appropriate adjustment to price or refund regarding items listed on the Purchase Order.

Of counsel attorneys, are treated the same as other third party vendors and their bills are not paid unless and until payment is received from a Client.

Once an invoice or a Request is scanned into the system, that invoice will always be associated with the line items for the Purchase Order in the System. If the narrative is longer than one line, the User of the system will have the option to display additional lines, as necessary. The System will have the ability to print and reprint checks upon demand, complete with encoded signatures of the appropriate check signatories. The System will have the ability to cancel and void checks. The system will be able to produce payment advices or notices when payment will be made and under whatterms and conditions. The System will be able to transmit payment via intermediary banks. The System will be able to pay a Client's costs or expenses on behalf of another office. The System will be able to transmit Positive Pay files to a Bank or other Financial Institution.

The system will be able to post a Journal Entry (Income or Expense) in any desired currency, with or without a currency override. Journal entries may be posted in managed or non managed accounts, to a direct account with or without a Personnel number, and it can be posted across multiple Profit or Cost Centers Centers with or without an SIO. A Cost Center is one such as Research and Development where costs are generally not recovered except over a long period of time and which are generally not assignable to a particular Task, Matter, Client or Activity. A SIO or Statistical Internal Order is a Cost Center where costs may be spread out of several items. These are ERP and SAP terms. Cash receipts are posted directly to the General Ledger.

In SAP or ERP, a ledger is a section of a database table. A ledger only contains those dimensions of the totals table that the ledger is based on and that are required for reporting. In General Ledger Accounting, the User may utilize several ledgers in parallel. This allows the User to produce financial statements according to different accounting principles, for example GAP (Generally Accepted Accounting Principles), FIT (Financial Income Tax), accrual or cash. The User may create a ledger for each of the general ledgers needed. A ledger uses several dimensions from the totals table it is based on. Each dimension of the totals table represents a subset of the coding block. The User may also include customer fields in all the ledgers. To do this, the User must add the customer field to the coding block and then include this field in the totals table that the ledger is based on. It is the User who defines the ledgers in Customizing for Financial Accounting (New) under Financial Accounting Global Settings (New) Ledgers Ledgers. Upon the creation of a ledger, the system automatically creates a ledger group with the same name. The User must then designate one ledger as the leading ledger for a SAP/ERP system to work.

In the present invention, items can be posted to Personnel numbers, and Management Allocations can be posted across Company Codes over up to two years. Allocations can be tracked from other systems and also by Title, employee ID or employee level. Expenses can be tracked by Client groups for profitability analysis and ROI calculations. The BV Service Fee can be posted on management books. Intercompany expenses can be posted on the paying Office's books, and then transferred later to the appropriate Company Code. Journal entries can be parked or held prior to posting.

It should be observed that there are numerous configurations, options, additions and rearrangements of elements found in the prior art which are considered obvious to try and which should be considered as part of the summary of the present invention as if fully set forth herein.

According to one embodiment, there is provided
an Improved System for Managing Vendors and Vendor payments comprising:
creating an online account for a Company employee with a password and ID, the employee entering the System and using a CPU and data storage to access the System; the Employee entering a database of pre selected Products and Services which have been pre approved by the Company, the Employee selecting two or more items and comparing their features and attributes and price and making a selection of one or more items for purchase online, the System generating a Request for Purchase and entering it into the System for approval by one or more entities approving Purchase requests, upon approval the System then generating a Purchase Invoice displaying an Invoice Number and the System then electronically contacting the Vendor to purchase the Products and Services listed in the Purchase Invoice wherein the System is ableto compare Products and Services and create Purchase Invoices in two or more currencies. The Improved System for Managing Vendors of Claim 1 further displaying to the User of the System atleast one or more product and service reviews which have stored in the System and which product and service reviews are associated with one or more products and services are under consideration by the Company employee for purchase.

According to one embodiment, the System further comprises displaying to the User of the System at least one or more product and service reviews which the System searched for online and then displayed to the User of the System to aide in any purchasing decision.

According to one embodiment, the System further having stored over time a series of purchases for given Products and Services, then analyzing the usage of the Products and Services over time and the System then periodically asking the User electronically if it is time to reorder any Products and Services so that the User will not run out of needed Products and Services are performed punctually.

According to one embodiment, the System further having means to scan in a Bill of Lading at the time of delivery of the Products and Services to the User which is matched to the Request for Purchase, wherein the User may then review the items received and check them for quality, quantity and price and compare these to the Bill of Lading and note any discrepancies thereupon which are immediately entered into the System as an unacceptable variance.

According to one embodiment, the System further having means to scan a Bill of Lading for one or more of the following codes: a UPC code, a QRT code and a product code and enter the scanned code into the Sy stem together with a quantity received.

According to one embodiment, the System further having means to receive Goods and Services, generate a review form, electronically transfer the review form to one or more employees that ordered the Goods and Services, the employees ordering the Goods and Services received then rating the Goods and Services on at least their quality and attributes and then saving the review in the System for future reference.

According to one embodiment, the System further having means to approve a Request for Purchase by one or more managers based upon one or more of the following: the Employee's ID, the Employee's job title and the Employee's job level.

According to one embodiment, the System further having means to allocate expenditures for Goods and Services on a line by line basis by one or more of the following: Task, Matter, Activity, Phase, Client and Client Group. According to one embodiment, taxes paid for Goods and Services are allocated to one or more of: a general ledger, cash ledger, sub ledger and tax ledger. According to a further aspect, there is provided a method for Managing Vendors and Vendor payments comprising:
creating an online account for a Company Employee with a password and ID, the employee entering the System and using a CPU and data storage to access the System; the Employee entering a database of pre selected Goods and Services which have been pre approved by the Company, the Employee selecting two or more Products and Services and comparing their features and attributes and price and making a selection of one or more Products and Services for purchase online, the System generating a Request for Purchase and entering it into the System for approval by one or more entities approving Purchase requests, the approving entities then approving the Request for Purchase, and then the System generating a Purchase Invoice in two or more currencies.

According to one embodiment, the Method
further comprises displaying to the User of System at least one or more product and service reviews which have been Stored in the System and which product and services reviews are associated with one or more products and services under consideration by the Company employee for purchase.

According to one embodiment, the Method further comprises displaying to the User of the System at least one or more product and service reviews which the System searched for online and then displayed to the User of the System to aide in any purchasing decision.

According to one embodiment, the Method further
comprises storing over time a series of purchases for a given products and services, then analyzing the usage of the Product and Service over time and the System then periodically asking the User electronically if it is time to reorder the Product and Service so that the User will not run out of a Product and any Service will be performed in a timely manner.

According to one embodiment, the Method further having means to scan in a Bill of Lading at the time of delivery of Products and Services to the User which is matched to the Request for Purchase, wherein the User may then review the Product and Services received and check them for quality, quantity and price and compare these to the Bill of

Lading and note any discrepancies thereupon which are immediately entered into the System as an unacceptable variance.

According to one embodiment, the Method further having means to scan a Bill of Lading for one or more of the following codes: a UPC code, aQRT code and a product code and then entering the scanned code into the System together with a quantity received.

According to one embodiment, the Method further having means to receive Products and Services, then the System generating a review form, the System electronically transferring the review form to one or more employees that order the Products and Services, the
employees ordering the Goods and Services received then rating the Goods and Services on at least their quality and attributes and then saving the review in the System for future reference.

According to one embodiment, the Method further having means to approve a Request for Purchase by one or
more managers based upon one or more of the following: the Employee's ID, the Employee's job title and the Employee's job level and then approving at least one Request for Purchase.

According to one embodiment, the Method further having means to allocate expenditures for Goods and Services
on a line by line basis by one or more of the following Categories: Task, Matter, Activity, Phase, Client and Client Group and then allocating at least one expenditure to at least one Category.

According to one embodiment, the Method further having means for noting taxes paid in connection with the
purchase of Goods and Services and means for allocating the purchase of Goods and Services to one or more of the following Tax Categories: a general ledger, a cash ledger, a sub ledger and a tax ledger, and the System allocating the Purchase of Goods and Services to at least one Tax Category.

According to one embodiment, the System will not display any Vendors who have received too many low ratings to prevent employees from making purchases from said Vendors.

According to one embodiment, the Method further having the steps of: blocking the display of any Vendors who have received too many low ratings to prevent employees from making purchases from said Vendors.

### Objects of the Invention

Thus, it is one primary object of the present invention to provide an improved system and method for Vendor management which is able to create a request for goods and services from third party vendors such that a company employee can access the improved System, search the system for goods and services which are needed, find the best quality goods and services for a historical price, ping the Vendor for a current price, and place an order by phone, fax, email ortext.

It is an additional primary object of the present invention to provide an improved system and method for Vendor management for creating a request for goods and services from third party vendors searching through the Company directory of vendors, accessing a QRT code or UPC code for a preferred product or service with an optimal price and then pinging the Vendor for a current price.

It is a further primary object of the present invention to provide an improved system and method for Vendor management for scanning in or texting a photo of a Bill of Lading so that the System can automatically identify variances in price, quality or quantity and place a block on the order to rectify the situation via the appropriate contract purchase personnel.

It is yet an additional primary object of the present invention to provide an improved system and method for Vendor management for requiring employees to rate the value of goods and services received promptly after receipt so that other divisions and company locations are alerted if such value is not acceptable for company purchases in the future, if such goods and services are highly rated.

It is still a further primary object of the present invention to provide an improved system and method for Vendor management wherein if an statistically reliable employee ratings system is not available, then the employee requesting goods and services may have the System search the internet for ratings on goods and services from third party purveyors such as: Yelp, Yipit, Google, Ebay, Amazon and the like for further information.

It is yet an additional primary object of the present invention to provide an improved system and method for Vendor management wherein an employee in need of third party goods and services may log into his or her company account and request goods and services and see the highest rated purveyors at the most optimal prices and review the ratings, products and delivery times to meet the needs of the employee and/or client in need of such goods and services.

It is still a further primary object of the present invention to provide an improved system and method for Vendor Management where in the System will analyze vendor rating online and by employees and then ban any Vendors where ratings are deemed unacceptably low.

It is still a further primary object primary object of the present invention to provide an improved system and method for Vendor management wherein a third party approval is built into the system, such that after an employee selects a vendor based upon favorable pricing, the optimal price and the selection is sent to the third party via fax or email or password protected website for the necessary approvals.

It is yet an additional primary object primary object of the present invention to provide an improved system and method for Vendor managementwherein Vendor expenses can be allocated to one or more of the following accounting categories: Matter, Client, Client Group, Task, Activity, Phase or Matter.

It is still yet a primary object of the present invention primary object of the present invention to provide an improved system and method for Vendor management wherein at the time goods are received, the Bill of Lading may be scanned ortexted via photo into the System and the System may automatically cross reference and check for correct quantities and costs at the point of delivery, and where variances occur, those are flagged to each of the System, the provost, the employee and the Vendor so that variances can be quickly and efficiently dealt with and resolved, so thatif payment is remaining, it can efficiently be made.

These and other objects and advantages of the present invention can be readily derived from the following detailed description of the drawings taken in conjunction with the accompanying drawings present herein and should be considered as within the overall scope of the invention.

### Brief Description of the Drawings

Figure 1 is a flow chart of the present inventive method, Improved Vendor Online Order and Tracking System.
Figure 2 is a flow chart of the present inventive method, Improved Journal Entry Posting and Tracking System.
Figure 3 is a screen snap shot of one embodiment of the present invention, Improved Expense Posting System.
Figure 4 is a screen snap shot of one embodiment of the present invention, Improved Expense Posting System.
Figure 5 is a screen snap shot of one embodiment of the present invention, Improved Expense Posting System.
Figure 6 is a screen snap shot of one embodiment of the present invention, Improved Expense Posting System.
Figure 7 is a screen snap shot of one embodiment of the present invention, Improved Expense Posting System.
Figure 8 is a screen snap shot of one embodiment of the present invention, Improved Expense Posting System.

### Detailed Description of the Drawings

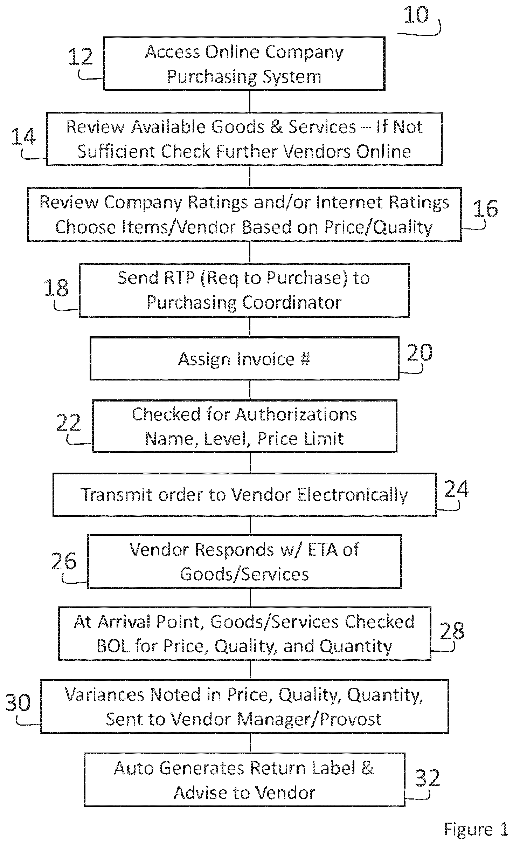

Shown now in Figure 1 is a flow chart of one preferred embodiment of the present invention, Preferred Vendor Online Order and Tracking System 10 showing the first step is to access the online company purchasing system 12when an employee desires to make a purchase on behalf of the Company or Client. Next the Userof the System will review the available goods and services already present in the system 14. If what is existing in the System is not sufficient to meet the needs of the User and there are no pre approved or formerly utilized Vendors or Goods and Services previously ordered from the Vendors in the system, the User of the System will be able to look online for further Vendors with the desired Goods and Services, or even in local stores. At this point the Employee can input a new Goods or Service into the System and may even scan any QRT or UPC codes into the System.

Next, the User will be able to check the best price for all comparable goods and services in that category, either in the existing System or in Online web sites, including, but not limited to: Ebay, Amazon, Office Max, Office Depot, local stationers, etc. and the System will automatically display and all reviews which it has found for that product or service category. The System will also automatically display a calculator and the price per unit, if it can be located. The System will also be able to make a listing of items to be compared and can list them from low to high including shipping, so that the User can find goods or services at optimal prices for the company.

Next, the User will select the Goods and Services desired for that Vendor 16, the Vendor's name, address, email, fax, terms and conditions for payment will be entered into a Request to Purchase to the Purchasing Department for Approval 18, if the System does not already contain the information. The Purchasing Department will then assign an invoice number to the request 20, analyze it and either approve or deny the request, notification of approval or rejection will be sent back to the employee or Userin electronic format. The Purchasing Department may hold the invoice to ask for further details or overrides from the employee's supervisor who may have greater power to approve purchases. The Purchasing Department will check the Requestor's name, title and level to determine what, if any limits the Requestor has for spending at the company 22. In addition, if the Requestor's purchases have further approvals, the invoice will then be transmitted to the other Employees for their approval of the invoice, as well.

Once the Invoice has been approved, then the order will be transmitted to the Vendor by fax, email or other form of electronic transmission. The System also has the capability to store Vendor templates and issue Purchase Orders in the form or format required by the Vendor. All Employees at the Company are treated as Vendors as well, as well as Clients. Of counsel employees are further treated as third party vendors.

Once the Vendor has approved the Purchase Order, the Vendor company will respond with an ETA or Estimated Delivery Time for the Order 26 and the System will automatically docket this date and send the invoice to the Accounts Payable department for payment. Once the goods and services have arrived at the company, the Bill of Lading will be checked for price, quantity and quality of the goods, and the goods themselves will be inspected as well for any variances 28, which variances will immediately be noted on the Bill of Lading which is then texted or scanned and emailed to the Purchasing Dept. for further processing. If a variance of any kind is noted-price, quantity or quality, then the entire invoice and Bill of Lading is flagged so that the Purchasing Manager will become directly involved 30 to resolve any discrepancies, correct payments, request refunds, obtain any RMA's from the Vendor(Return Merchandise Authorizations), and a Return Label may be automatically printed by the System 32 as well as any communication explaining the return or credit desired, and a pick up arranged by a major carrier-USPS, UPS, Fed. Exp. such that the goods are returned in an expedient manner.

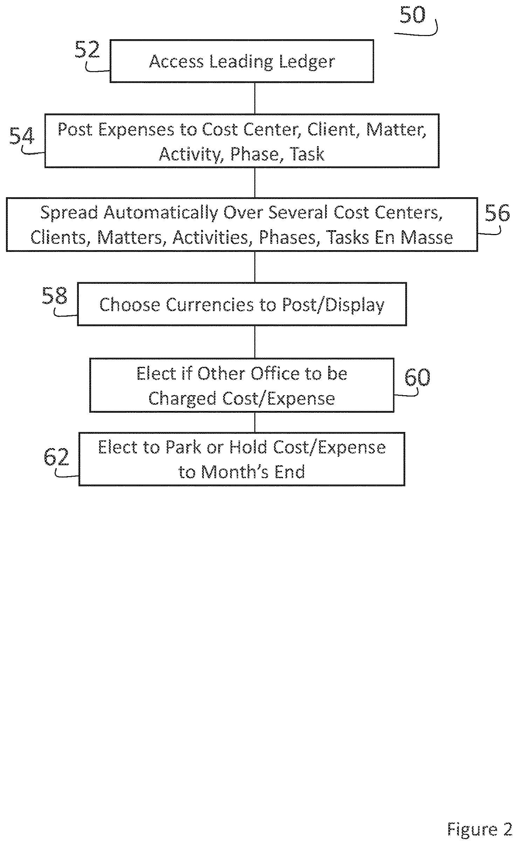

Figure 2 shows an Improved Method for Entering and Posting Journal Entries 50 wherein the first step is access the Leading Ledger and related Ledgers 52, then expenses and costs may be posted to any of the following: a Cost Center, Client, Matter, Activity, Phase or Task 54. If the User desires, the new journal entry or posting can be split across multiple Cost Centers, Clients, Matters, Activities, Phases or Tasks 56 en mass, by selecting the multiple categories and assigning a percentage for each. For example, the Client can select 4 Clients or Cost Centers and assign each 25%of the total expenditure or cost. The System will also allow the User to select multiple currencies to display on Reports, and the System can either use a pre set exchange rate, or the System can be asked to ping one or more web sites for an updated exchange and take the average of these, or the User can manually override the System and enter in the User's desired exchange rate 58.

In addition, the User may elect if a Client from a different Office will be billed for the Expenditures and the cost or expense will automatically transfer to that Office to post in due course 60. A further feature of the present invention is that it will allow the user to "park" or place on hold a variety of expenses until the accounting is closed out at the end of the month 62. This is helpful in preparing interim accounting reports where certain expenses may distort the figures during a middle of the month run.

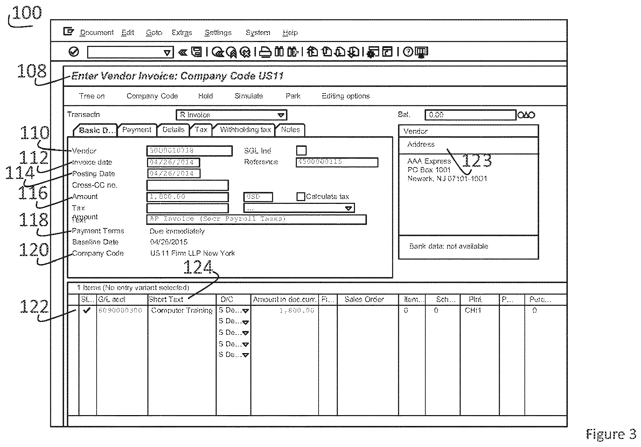

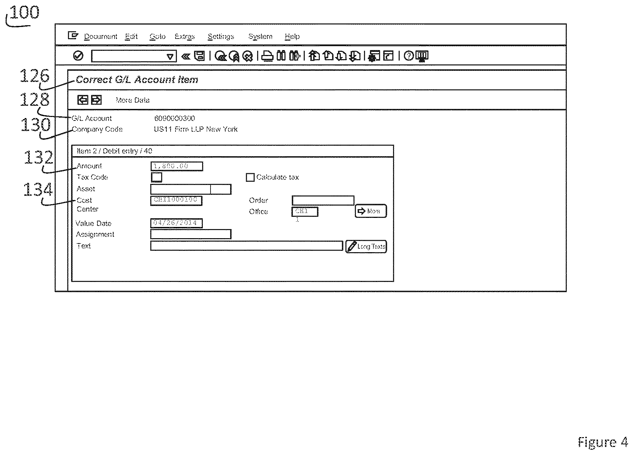

Figure 3 shows a screen shot of Improved Expense Posting System 100 for a preferred embodiment of the improved process for entering a Vendor Invoice into a General Ledger account for the company or firm. This Figure shows the Header: Enter Vendor Invoice 108, Vendor ID field 110, Invoice Date 112, Posting Date 114, Amount 116, Payment Terms 118, Company Code or ID 120, Item Paid Listing 122, Vendor Address 123 and Short Text or Description 124. The user will double click on the GL Account: 6090000300, and then enter the cost center and office as shown in Figure 4.

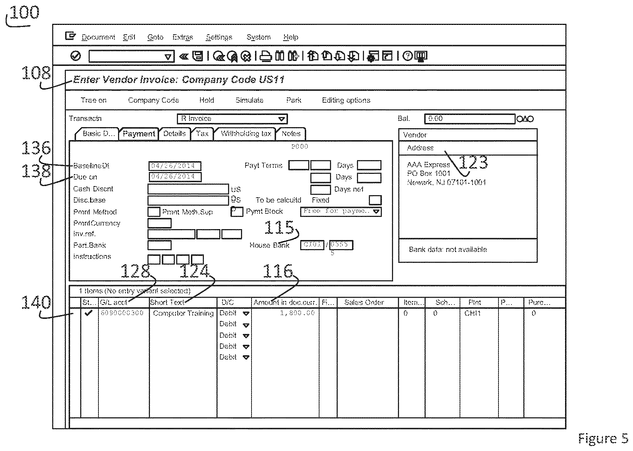

Figure 4 shows a screen shot of Improved Expense Posting System 100 for a preferred embodiment of the improved process for entering a Vendor Invoice into a General Ledger account for the company or firm. This Figure shows Header: Correct G/L account item 126, General Ledger Account Field 128, Company ID 130, Amount 132, and the Cost Center 134 for the charge to be allocated to. The user will press enter and then press the green go back arrow to go back to the initial screen and then click the payment tab to enter the house bank as shown in Figure 5.

Figure 5 shows a screen shot of Improved Expense Posting System 100 for a preferred embodiment of the improved process for entering a Vendor Invoice into a General Ledger account for the company or firm. This Figure shows Header: Enter Vendor Invoice 108, Vendor Address 123, Baseline Date 136, Due Date 138, a Listing of Items 140 showing then General Ledger account 128 for each item listed, the Short Text or Description 124 for each item, and the Amount 116 of the charge in the document currency. The House Bank information 115. In the US, this is the routing number and account number; in other countries this will include a Swift Code and routing number. The user will click on the Save button to post the hard cost invoice, and then will review the posted document for accuracy.

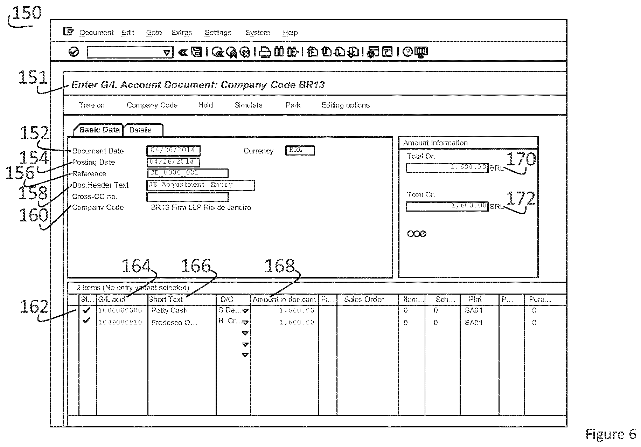

Figure 6 shows a screen shot of Improved Expense Posting System 150 for a preferred embodiment of the improved process for entering a Vendor Invoice into a General Ledger account for the company or firm. This Figure shows Header: Enter G/L account Document: Company Code X 151, the Document Date 152, the Posting Date 154, the Reference 156, the Document Header Text 158, the Company Code 160, the Header for the listing of Items 162, the General Ledger Account 164 each Item is charged to, and the Description or Short Text 166, the Amount of the charge 168, the Total Debit 170 or Total Credit 172 paid.

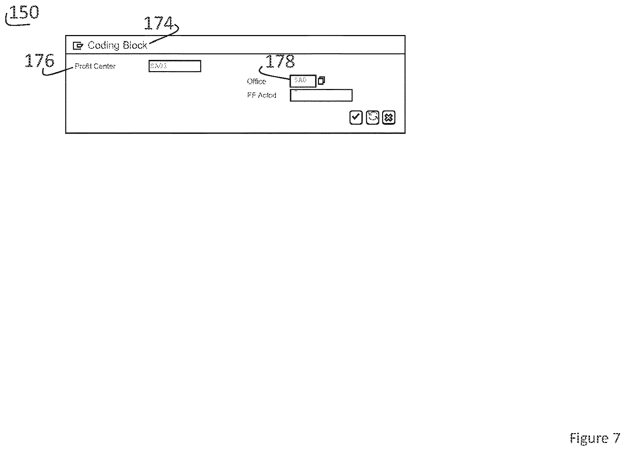

Journal entries can be processed either by posting into the leading ledger or by posting in a non leading ledger. Both processes are described in Figs. 6 to 8. In Figure 6, the user will double click on the GL Account 1000000000, then the user will click on the More button and enter the office code as shown in Figure 7 in the coding block.

Figure 7 shows a screen shot of Improved Expense Posting System 150 for a preferred embodiment of the improved process for entering a Vendor Invoice into a General Ledger account for the company or firm showing Coding Block 174, Profit Center 176 and Office 178. The user will repeat the steps for another GL Account 1049000910 to enter the Office code and then hit enter to code the entry properly. The user will then hit the green go back arrow that appears next and the user will go back to the initial screen where the user can click on the Save button to post the journal entry and then review what was posted.

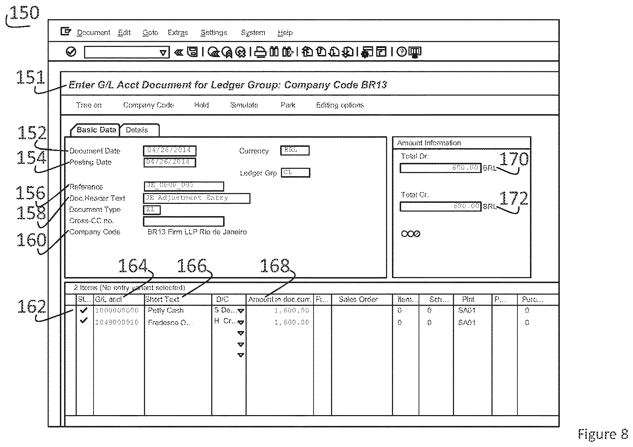

Figure 8 shows a screen shot of Improved Expense Posting System 150 for a preferred embodiment of the improved process for entering a Vendor Invoice into a General Ledger account for the company or firm showing Header: Enter G/L Acct Document for Ledger Group Company Code: x 151, the Document Date 152, the Posting Date 154, the Reference 156, the Document Header Text 158, the Company Code 160, the Header for the listing of Items 162, the General Ledger Account 164 each Item is charged to, and the Description or Short Text 166, the Amount of the charge 168, the Total Debit 170 or Total Credit 172 paid. The user can post a Journal Entry to a Cash Ledger (non leading ledger), but does so by entering document type 2L and the Ledger Group CL to post an entry to a cash ledger. After the user has entered the data for this listing on the screen shown in Figure 8, the user will double click on the GL Account 1000000000, and then click on the More button to enter the Office code as shown in the "Coding Block" of Figure 7 and then the user will press the Enter key. Next, the user will press the green arrow goback button to go back to the original screen where the User can press the Save button and then review the Journal Entry saved.

Although in the foregoing detailed description the present invention has been described by reference to various specific embodiments, it is to be understood that modifications and alterations in the structure and arrangement of those embodiments other than those specifically set forth herein may be achieved by those skilled in the art and that such modifications and alterations are to be considered as within the overall scope of this invention.

## Claims

1. A system of the type used to facilitate purchases by employees of a company, the system comprising a CPU and data storage configured to:
present, via a user interface generated by the system, a user logon;
receive, via the user interface through the user logon, information indicative of a user;
automatically search with the CPU for ratings on goods or services of at least one vendor from a third party website;
access with the CPU the third party website and automatically download review data for the vendor;
determine, by the CPU, whether the vendor meets a standard for preapproved vendors based on the review data from the third party website, and when the vendor fails to meet the standard, automatically ban the vendor from being one of the preapproved vendors;
determine by the CPU, based on the information indicative of the user, a list of the pre-approved vendors and pre-selected items from which the user is capable of ordering;
present, via the user interface, a display of the pre-approved vendors and the pre-selected items;
receive, via the user interface, information indicative of a purchase request for two or more items by an employee of the company;
provide, based on a predetermined set delivery time for the two or more items, an automatic message to the employee requesting verification of receipt of the two or more items;
receive from the employee, in response to the message, an indication that the two or more items have not yet been received; and
provide, in response to the indication that the two or more items have not yet been received, a query to the employee whether to cancel the purchase request or continued waiting for the two or more items.

2. The system of claim 1, the CPU and data storage further being configured to:
present, via the user interface, at least one product and service review associated with the pre-selected items.

3. The system of claim 2, the CPU and data storage further being configured to:
display, via the user interface, a product and service review obtained via an online search.

4. The system of any of claims 1 to 3, the CPU and data storage further being configured to:
receive an indication that the two or more items have been received;
generate a review form and electronically transfer the review form to one or more employees; and
receive, responsive to the review form, rating information concerning the two or more items on at least their quality and attributes and then saving the rating information for future reference.

5. The system of any of claims 1 to 4, the CPU and data storage being further configured to:
automatically block the display of any vendor that has received too many low ratings.

6. The system of any of claims 1 to 5, the CPU and data storage being further configured to:
generate a purchase request for the two or more items;
transmit the purchase request to a vendor; and
receive, from the vendor, information indicative of the estimated delivery time for the two or more items.

7. The system of any of claims 1 to 6, wherein, when presenting the display of vendors, the CPU and data storage are further configured to determine the display of vendors based on a name, level or rank of the employee.

8. A method facilitating interactions between employees of a company and a system of the type used for facilitating purchases made by the employees, the method comprising:
presenting, via a user interface generated by the system, a user logon;
receiving, via the user interface through the user logon, information indicative of a user;
automatically search with the CPU for ratings on goods or services of at least one vendor from a third party website;
accessing with the CPU the third party website and automatically downloading review data for the vendor;
determining, by the CPU, whether the vendor meets a standard for preapproved vendors based on the review data from the third party website, and when the vendor fails to meet the standard, automatically ban the vendor from being one of the preapproved vendors;
determining by the CPU, based on the information indicative of the user, a list of the pre-approved vendors and pre-selected items from which the user is capable of ordering;
displaying on the user interface the pre-approved vendors and pre-selected items;
receiving, by the system via the user interface, information indicative of a purchase request for two or more items by an employee of the company;
providing, by the system based on an estimated delivery time for the two or more items, an automatic message to the employee requesting verification of receipt of the two or more items;
receiving, by the system from the employee in response to the message, an indication that the two or more items have not yet been received; and
providing, by the system in response to the indication that the two or more items have not yet been received, a query to the employee whether to cancel the purchase request or continue waiting for two or more items.

9. The method according to claim 8, further comprising:
presenting, by the system via the user interface, at least one product and service review associated with the pre-selected items.

10. The method according to claim 9, wherein presenting product and service reviews further comprises displaying a product and service review obtained via an online search.

11. The method according to any of claims 8 to 10, further comprising:
receiving, by the system, an indication that the two or more items have been received;
generating, by the system, a review form and electronically transferring the review form to one or more employees; and
receiving, by the system, responsive to the review form, rating information concerning the two or more items on at least their quality and attributes and then saving the rating information for future reference.

12. The method of any of claims 8 to 11, further comprising:
automatically blocking, by the system, the display of any vendor that has received too many low ratings.

13. The method of any of claims 8 to 12, further comprising:
generating, by the system, a purchase request for the two or more items;
transmitting, by the system, the purchase request to a vendor; and
receiving, by the system from the vendor, information indicative of the estimated delivery time for the two or more items.

14. The method of any of claims 8 to 13, wherein, presenting the display of vendors further comprises determining the display of vendors based on a name, level or rank of the employee.
